# EUROPEAN PATENT SPECIFICATION

(11) **EP 0 412 443 B1**
(45) Date of publication and mention of the grant of the patent: **09.11.1994**
(21) Application number: 90114891.6
(22) Date of filing: 02.08.1990
(51) Int. Cl.: B60T 8/42, B60T 8/48, B60T 13/12

(54) **Brake system**
Bremssystem
Système de freinage

(30) Priority: 07.08.1989 JP 205388/89
(43) Date of publication of application: 13.02.1991
(73) Proprietor: SUMITOMO ELECTRIC INDUSTRIES, LTD., Osaka-shi, Osaka 541 (JP)
(72) Inventor: Takata, Koji c/o Itami Works Sumitomo, Itami-shi Hyogo (JP)
(74) Representative: Glawe, Delfs, Moll & Partner

(56) References cited:
- EP-A- 0 268 076
- EP-A- 0 279 940
- DE-A- 3 806 227
- DE-A- 3 904 614
- DE-C- 3 812 830
- GB-A- 2 174 161
- GB-A- 2 179 715

## Description

The invention relates to a brake system according to preamble part of the claim 1 which satisfies all the requirements such as safty, sophisticated control, improved pedal feeling and reduction on cost.

If a large effective sectional area of a static pressure generator, i.e. a master cylinder, is adopted to reduce the pedal stroke and the consequent increase in the pedal force is compensated for by an appropriate booster, the pedal force in the failure of a dynamic pressure source will become extremely large.

On the other hand, the reduction of the sectional area in an attempt to lighten the pedal force will bring about an increase in the pedal stroke. In both cases, the pedal feeling is unsatisfactory.

The present applicant proposed in Japanese Patent Application 1-85176 a brake system which can attain both the shortening of the pedal stroke in normal conditions and the lightening of the pedal force in case of the failure of the dynamic pressure line and furthermore enables the relation between the pedal stroke and the deceleration to be set in any desired manner. In this brake system, pressure fluid from the dynamic pressure source is introduced to the static pressure line and the pressure fluid in the static pressure line is discharged into a reservoir by executing electronic control so that the pedal stroke and the vehicle deceleration will be in a predetermined relationship with each other.

The prior art system was unsatisfactory in that:
1) If even a very small amount of pressure fluid should leak through a flow control valve while the supply of pressure fluid from the dynamic pressure source to the static pressure line ceases due to a failure in the dynamic pressure line or the electronic control, the pressure fluid in the static pressure line might leak out gradually while braking. In order to assure safety, it is necessary to provide some means for preventing such a leakage.
2) If the static pressure line shows a partial failure, that is, if a medium degree of leakage takes place, the pressure fluid of the dynamic pressure source might be consumed to a considerable degree before the leakage is detected.
3) If a flow-variable control valve is used to upgrade antilock control, it is necessary to provide an extra flow-variable control valve for the stroke control. This will increase the cost.

An object of this invention is to provide a brake system in which means for shortening the pedal stroke in normal conditions and also lightening the pedal force in the dynamic pressure line failure conditions, is combined with an antilock control means and automatic braking means such as traction control means.

It is a well-known antilock control method to separate a static pressure line from a dynamic pressure source by use of a unilateral driving piston which can increase the capacity of the static pressure line (e.g. U.S. Patent 4606585).

A brake system according to the preamble part of claim 1 is known from DE-C-38 12 830.

Furthermore, DE-A-38 06 227 shows a brake system comprising a static pressure line comprising a bilateral driving piston one end acted by brake pressure, a changeover valve, a flow control valve and an electronic control unit for giving commands to said flow control valve.

According to the invention the above mentioned object is solved by the features of the characterizing part of claim 1.

The brake system according to this invention will be more easily understood if we consider that one of its driving pistons is made bilateral and performs the function of both reducing the capacity of the static pressure line to shorten the pedal stroke and also increasing the capacity of the static pressure line to reduce the brake pressure for antilock.

Namely, in this invention, the bilateral driving piston has its one end open to the brake pressure and the other end to the control pressure,
the piston is held in a predetermined neutral position during a non-control phase wherein the manual input is approximately zero,
in a normal control phase, the capacity of the static pressure line is controlled to decrease so that the input control stroke will shorten, maintaining a predetermined relationship with respect to the deceleration or the other braking factors closely related thereto, and
during antilock control, the fluid flow from a static pressure generating device to a brake circuit is shut off by means of a solenoid valve provided to prevent the backflow and the bilateral driving piston is controlled in such a direction as to increase the capacity of the static pressure line adjusting the control pressure by means of a flow control valve.

The bilateral driving piston should be returned to its neutral position during the non-control phase:
1) by providing a position sensor to detect at least the neutral position of the bilateral driving piston and move the driving piston to the neutral position by means of the flow control valve according to the sensor signal, or
2) by providing a spring to push the bilateral driving piston back to its neutral position when the brake pressure is approximately equal to the control pressure and control the flow control valve so that the control pressure should become zero, when the brake pressure is zero, thus allowing the piston to move back to its neutral position with the spring force.

When moving the bilateral driving piston in such a direction as to reduce the capacity of the static pressure line in normal conditions, it may be controlled so as to maintain a predetermined relationship between:
(a) the control stroke and the deceleration of the vehicle,
(b) the stroke of the driving piston and the vehicle deceleration,
(c) the stroke of the driving piston and the manual control stroke, or
(d) the stroke of the driving piston and the manual control force or the fluid pressure (in the static pressure line or the dynamic pressure line) which is proportional to the manual control force.

In any case, in normal conditions, the manual control stroke is eventually shortened so as to be in a predetermined relationship with the deceleration. Namely, though the manual control stroke is not directly related to the deceleration if a relation other than the relation (a) is selected, the manual control stroke is considered to be indirectly and roughly related to the deceleration, since such braking factors as the stroke of the driving piston, the manual control force and the pressure proportional to the manual control force are closely related to the deceleration.

A stroke sensor capable of detecting the amount of reduction in the capacity of the static pressure line can be used as a position sensor. In that case, the amount of reduction in the capacity of the static pressure line can be directly controlled by the pedal stroke, taking advantage of the relation (c). It is also possible to use a pressure sensor as a stroke sensor by utilizing the relation (b) or (d) (if the relation (d) is used, a pressure sensor has to be provided.) Advantageously, a common sensor may be used rather than using separate sensors to detect the neutral position and the reduction in the capacity of the static pressure line.

If the stroke sensor for the driving piston is capable of detecting the increase in the capacity of the static pressure line, anti lock control will become easier and failure can be detected more effectively.

If the bilateral driving piston is returned to its neutral position by use of a spring, not by the stroke sensor, the size and cost of the system will be reduced. In this case, the relation (a) is used in controlling the reduction in the capacity of the static pressure line. Of course, the relations (b) - (d) can be used if a stroke sensor for the driving piston is used in combination with the spring.

Further by providing a second solenoid valve for preventing backflow during automatic braking from the brake circuit including the bilateral driving piston to the static pressure generator, i.e. the master cylinder piston, automatic brake control such as traction control is possible with the same flow-variable control valve.

The present invention is applicable to a system in which one of its lines is a static pressure line and the other is a dynamic pressure line or to a system having a tandem master cylinder and thus having two static pressure lines. Namely, the present invention is applicable to a system having a fluid pressure booster as well as a system having a vacuum booster.

If a tandem master cylinder is used, it is possible to provide a bilateral driving piston in only, one of the static pressure lines near a pedal push rod.

If a plurality of brakes are coupled to one of the static pressure lines, a bilateral driving piston may be provided for one brake only while providing the other brakes with simple unilateral driving pistons for antilock control only. But if the function of traction control is added, the brakes for all the driving wheels have to be provided with bilateral driving pistons.

By reducing the capacity of the static pressure line in normal conditions by means of the bilateral driving piston, the pedal stroke can be shortened without increasing the effective sectional area of the master cylinder, which in turn gives lighter pedal force in case of failure in the dynamic pressure line.

Also, since the brake circuit in the static pressure line provided with the bilateral driving piston is a closed circuit separated from the dynamic pressure line, the abovesaid problems 1) and 2) will be obviated.

Further, since a single flow control valve for adjusting the control pressure can be used both for increasing and reducing the capacity of the static pressure line, the problem 3) is obviated.

This arrangement further makes it possible to upgrade the antilock control with a smaller number of components. Thus the brake system according to this invention is high in performance and reliability and advantageous in cost.

Other features and objects of the present invention will become apparent from the following description taken with reference to the accompanying drawings, in which:
Fig. 1 is a circuit diagram of the first embodiment according to this invention; and
Fig. 2 is a circuit diagram of the second embodiment.

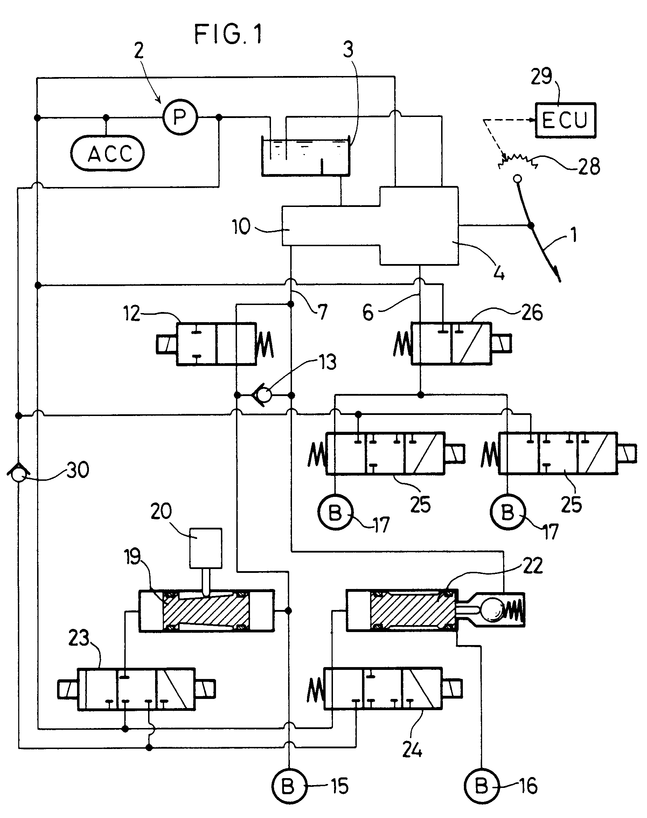

Fig. 1 shows a brake system utilizing a dynamic pressure from a fluid pressure booster in one line. By depressing a pedal 1, a dynamic pressure is given to a dynamic pressure line 6 after adjusted by a booster 4 connected to a reservoir 3 and a dynamic pressure source 2 comprising a pump, a check valve, an accumulator and a pressure switch. At the same time, a static pressure substantially equal to the dynamic pressure is given from a (single) master cylinder 10 to a static pressure line 7.

The pressure in the static pressure line is introduced into a wheel brake 15 through an antilock changeover valve 12 (including a check valve 13 arranged in parallel).

A bilateral driving piston 19, a characterizing feature in the present invention, is provided in parallel to the wheel brake 15. In this embodiment, it has a stroke sensor 20. The driving piston 19 is driven by a flow control valve 23 adapted to be closed in both ways in its inoperative conditions.

For another wheel brake 16, a unilateral driving piston 22 is provided solely for antilock control and is driven by a flow control valve 24 which is adapted to be brought into communication with the dynamic pressure source in its inoperative conditions. Since this method is well-known from many publications (such as US Patent 4606585), description of its details, such as a failsafe piston for deactivating a check valve in case of the dynamic pressure source failure, is omitted.

In this embodiment, the dynamic pressure line is assumed to be connected to the driving wheels. The pressure fluid of the dynamic pressure source is introduced into a wheel brake 17 through a changeover valve 26 for traction control and a flow control valve 25 controls the brake pressure in both antilock and traction control phases. As the flow control valve 25 in the dynamic pressure line, one proposed by the present applicant in Japanese Patent Application 1-154869 may be used.

Depending upon the type of the flow control valve 25, a check valve may be provided in parallel to the valve 25 so that the brake pressure should follow and drop sharply if the pedal is released abruptly during antilock control.

A pedal stroke sensor 28 is provided on the pedal 1 or a member associated therewith. Each wheel is provided with a wheel speed sensor (not shown). A vehicle acceleration/deceleration sensor and/or pressure sensor for various parts may further be added. The sensors and the control valves are connected to an electronic control unit 29 (wiring is not shown).

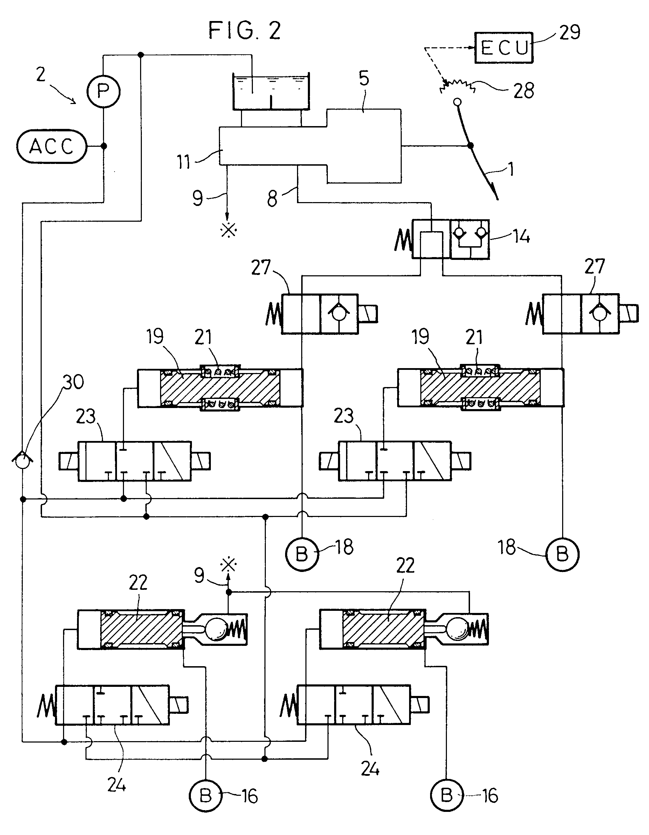

Fig. 2 shows an example in which a tandem master cylinder is used to supply static pressure to both lines.

Since it is not necessary to output dynamic pressure, the booster 5 may be a hydraulic booster or a vacuum booster. The outputs of the tandem master cylinder 11 are given to a first static pressure line 8 and a second static pressure line 9.

In this embodiment, an antilock changeover valve 14 in the first static pressure line 8 is made by integrating two pairs of changeover valves 12 and check valves 13 shown in Fig. 1.

In this figure, it is assumed that the driving wheels are included in one line only. In this case, it is advantageous to provide the brakes for the driving wheels in the first static pressure line 8 which is located nearer to the pedal push rod, if it is desired to add traction control function. This is because it is desirable to provide the bilateral driving piston 19 in the first static pressure line in order to maintain the pedal stroke control even while the other line is malfunctioning,

A traction control changeover valve 27 is provided for each driving wheel brake 18 and differs in construction from the changeover valve 26 shown in Fig. 1.

A bilateral driving piston 19′ in this embodiment differs from the one shown in Fig. 1. It has a return spring 21.

As shown in the figure, the return spring 21 may be a single spring provided between spring supports loosely fitted on a small-diameter portion of the piston 19 and capable of urging the piston in both ways. However it may also comprise two springs, one for biasing the piston in one direction and the other in the other direction.

The biasing force of the return spring 21 should be as small as possible as far as it can overcome the sliding resistance of the bilateral piston.

A unilateral driving piston 22 for antilock control only and a flow control valve 24 may also be used in the second static pressure line of the second embodiment.

If both lines each include one driving wheel, it is preferable to use:
members 12, 13, 27, 19 and 23 for the driving wheel brake side in the static pressure line,
members 22 and 24 for the non-driving wheel brake side in the static pressure line (it is of course possible to use members 12, 13, 19 and 23),
members 26 and 25 for the driving wheel brake side in the dynamic pressure line, and
members 25 for the non-driving wheel brake side in the dynamic pressure line. Of course, any of the system configurations may be freely combined with any of the methods for returning the bilateral driving piston 19 to its neutral position (20 or 21). Also, any of the parts may be provided separately or combined with any of the other parts.

Next, the operation of the embodiments will be described.

The operation of other parts than the bilateral driving piston is well-known in the art and its description is omitted.

While the pedal is not operated, if the stroke sensor 20 is provided, the bilateral driving piston 19 is controlled by the flow control valve 23 so as to be kept in a predetermined neutral position. If the return spring 21 is provided, the control pressure is kept at zero by the flow control valve 23 so that the driving piston 19 will be moved by the return spring 21 back to its neutral position and kept in this position.

Non-operation would be judged not only based on instantaneous values of the pedal stroke sensor 28 but taking into consideration the behavior of the pedal stroke and that of the vehicle deceleration.

When the pedal 1 is operated, the bilateral driving piston 19 is controlled by the flow control valve 23 to move in such a direction as to reduce the capacity of the static pressure line so that the measurement of the pedal stroke sensor 28 will be in a predetermined relation with the deceleration of the vehicle. This reduces the pedal stroke in normal conditions in any desired manner. If the amount of reduction in the capacity of the static pressure line is detectable, the pedal stroke in normal conditions may be reduced by controlling the relation between the pedal stroke and the piston stroke. Further, if a pressure sensor is provided, it may be reduced by controlling the relation between the pressure in the static pressure line or the dynamic pressure line and the pedal stroke or the piston stroke.

When the antilock control starts, the output of the static pressure line will be separated from the wheel brakes by the changeover valve 12 or 14. Thereafter, antilock control is continued by moving the driving piston 19 by means of the flow control valve 23.

One problem with a prior art brake system is that in using the unilateral driving piston 22 for antilock control only, if you try to increase the brake pressure above the pressure at which the antilock control began, the check valve is opened and the brake pressure tends to increase sharply if the master cylinder pressure has been increased at that time. This will make the control rough temporarily. Use of the bilateral driving piston 19 can solve this problem because it can operate in such a direction as to reduce the capacity of the static pressure line even after the brake pressure has recovered to the level of the pressure at the beginning of antilock control. In order to take full advantage of this merit, it is preferable to use the bilateral driving pistons 19 for all the brakes in the static pressure lines. But the cost factors should be taken into consideration.

If the front wheels to which a larger braking force is distributed are driving wheels, the use of bilateral driving pistons for the front wheels will improve the cost performance ratio including traction control.

A known method of traction control is applicable in the embodiment shown in Fig. 1. The brake pressure is controlled by use of the flow control valve 25 for antilock after introducing the pressure fluid of dynamic pressure source through the changeover valve 26 in the dynamic pressure line.

In the case of Fig. 2, after activating the check valve by actuating the changeover valves 27 in the static pressure lines including the bilateral driving pistons 19, the bilateral driving pistons are controlled by the flow control valve 23 in such a direction as to reduce the capacity of the static pressure lines and thus to obtain a desired brake pressure. One advantage of this method is its high responsiveness when the brake pedal is depressed further during traction control. In the embodiment of Fig. 1, only the non-driving wheel brakes can respond instantly when the pedal is depressed further.

The check valve 30 is provided to prevent the bilateral driving piston 19 from being pushed back toward the dynamic pressure source side when the pressure in the static pressure line increases above the pressure of the dynamic pressure source while the capacity of the static pressure line is being controlled to reduce. Such a check valve may be built in each flow control valve 23 to simplify the piping.

## Claims

1. A brake system having at least one static pressure line (7) including at least one wheel brake (15) and a static pressure generator (10, 11), directly or indirectly operated by a manual input device (1), said static pressure line (7) comprising:
a bilateral driving piston (19) having one end thereof acted on by the brake pressure prevailing in the cylinder of said wheel brake (15) and the other end acted on by a control pressure, a changeover valve (12, 14) provided in the static pressure line at a position between a static pressure generator (2) and the connection of the bilateral driving piston (19) to the static pressure line, thereby being capable of shutting off the fluid flow from the static pressure generator to the wheel brake but not the fluid flow from the wheel brake to said bilateral driving piston the changeover valve (12, 14) being in its inoperative position during normal operation, a normally closed flow control valve (23) for controlling the control pressure of said driving piston, a first detector means (28) for detecting the stroke of said manual input device, a second detector means for detecting a deceleration or other braking factors closely associated with the deceleration, and an electronic control unit (29) for applying control commands to said flow control valve,
means to control said flow control valve to hold said driving piston in a predetermined neutral position while said manual input device is not operated; and
means to control, in an antilock control phase, said changeover valve to shut off the fluid flow from said static pressure generator to the wheel brake and simultaneously control said flow control valve to increase the capacity of said static pressure line,
characterized in that
said electronic control unit comprises:
means to control, in a normal operation phase, said flow control valve so as to move said bilateral piston in such a direction as to reduce the capacity of said static pressure line and thus to shorten the stroke of said manual input device while maintaining a predetermined relatinship between the stroke of said manual input device and the deceleration or other braking factors closely associated with the deceleration.

2. A brake system as claimed in claim 1, further comprising a position sensor (28) for detecting at least the neutral position of said bilateral driving piston to control said flow control valve based on the signals from said position sensor to return said driving piston to the neutral position while the manual control input is zero.

3. A brake system as claimed in claim 1, further comprising a spring (21) for pushing said bilateral driving piston back to the neutral position from either direction when the brake pressure and the control pressure are substantially equal, wherein said flow control valve is controlled so that when the brake pressure is zero with zero manual control input, the control pressure will become zero.

4. A brake system as claimed in any of claims 1 to 3, further comprising a second changeover valve (27) provided in a static pressure line including a driving wheel brake (18) for shutting off the fluid flow from the wheel brake back to the static pressure generator, wherein when automatic brake control such as traction control is required, said second changeover valve is adapted to shut off the fluid flow from said wheel brake to said static pressure generator and said driving piston is controlled to move said flow control valve in such a direction as to reduce the capacity of the static pressure line to generate a desired brake pressure.

5. A brake system as claimed in any of claims 1 to 3, further comprising a stroke sensor (28) for detecting the stroke of a pedal (1) or that of a member associated with the pedal, wherein said driving piston is controlled so that in the normal control phase, the manual control stroke and the vehicle deceleration will be in a predetermined relationship with each other.

6. A brake system as claimed in any of claims 1 to 3, further comprising a stroke sensor (20) for detecting the stroke of said driving piston at least in such a direction as to reduce the capacity of the static pressure line, wherein said driving piston is controlled so that the stroke of said driving piston and the vehicle deceleration will be in a predetermined relationship with each other.

7. A brake system as claimed in any of claims 1 to 3, further comprising a stroke sensor (20) for detecting the stroke of said driving piston at least in such a direction as to reduce the capacity of the static pressure line, and a stroke sensor (28) for detecting the stroke of a pedal (1) or a member associated with the pedal, wherein said driving piston is controlled so that the stroke of the driving piston and the manual control stroke will be in a predetermined relationship with each other.

8. A brake system as claimed in any of claims 1 to 3, further comprising a stroke sensor (20) for detecting the stroke of said driving piston at least in such a direction as to reduce the capacity of the static pressure line, and a pressure sensor for detecting the manual control force or a fluid pressure proportional thereto, wherein said driving piston is controlled so that the stroke of the driving piston and the manual control force or the fluid pressure proportional thereto will be in a predetermined relationship with each other.

9. A brake system as claimed in any of claims 1 to 3, wherein said static pressure generator is a tandem master cylinder and the brake system has two static pressure lines, said bilateral driving piston being provided in at least one static pressure line belonging to the master cylinder chamber located nearer to the manual control end.

## Patentansprüche

1. Bremssystem mit wenigstens einer statischen Druckleitung (7), welches zumindest eine Radbremse (15) und einen statischen Druckgenerator (10, 11) umfaßt und direkt oder indirekt durch eine handbediente Eingabevorrichtung (1) betreibbar ist, wobei die statische Druckleitung (7) umfaßt:
einen bilateral treibenden Kolben (19), dessen eines Ende durch den im Zylinder der Radbremse (15) vorliegenden Bremsdruck betätigt wird und dessen anderes Ende durch einen Steuerdruck betätigt wird, ein Wechselventil (12, 14), das in der statischen Druckleitung an einer Stelle zwischen dem statischen Druckgenerator (2) und der Verbindung des bilateral treibenden Kolbens (19) mit der statischen Druckleitung vorgesehen ist, durch dieses in der Lage ist, den Druckmittelfluß von dem statischen Druckgenerator zur Radbremse, aber nicht den Druckmittelfluß von der Radbremse zu dem bilateral treibenden Kolben zu unterbrechen, wobei das Wechselventil (12, 14) während des normalen Betriebs in seiner nichtwirkenden Stellung ist, ein normalerweise geschlossenes Steuerventil (23) zur Steuerung des Steuerdruckes des treibenden Kolbens, ein erstes Detektormittel (28) zum Detektieren des Hubs der handbedienten Eingabevorrichtung, ein zweites Detektormittel zum Detektieren der Verlangsamung oder anderer eng mit der Verlangsamung verbundener Bremsfaktoren, und eine elektronische Steuereinheit (29), um Steuerbefehle zum Flußsteuerventil zuzuführen,
Mittel zum Steuern des Flußsteuerventils, um den antreibenden Kolben in einer vorgegebenen neutralen Stellung zu halten, während die handbediente Eingabevorrichtung nicht betätigt wird; und
Mittel zum Steuern des Wechselventils in einer Antiblokkier-Steuerphase, um den Flußmittelfluß von dem statischen Druckgenerator zu der Radbremse zu unterbrechen, und gleichzeitig des Flußsteuerventils, um die Kapazität der statischen Druckleitung zu erhöhen,
dadurch **gekennzeichnet,** daß
die elektronische Steuereinheit umfaßt:
Mittel, um in einer normalen Operationsphase das Flußsteuerventil zu steuern, so daß der bilaterale Kolben in eine solche Richtung bewegt wird, daß die Kapazität der statischen Druckleitung reduziert wird, und so daß der Hub der handbedienten Eingabevorrichtung verringert wird, während eine vorgegebene Beziehung zwischen dem Hub der handbetätigten Eingabevorrichtung und der Verlangsamung oder anderer eng mit der Verlangsamung verbundener Bremsfaktoren beibehalten wird.

2. Bremssystem nach Anspruch 1, mit
zusätzlich einem Positionssensor (28) zum Detektieren wenigstens der neutralen Position des bilateral antreibenden Kolbens, um das Flußsteuerventil basierend auf den Signalen des Positionssensors zu steuern, um den treibenden Kolben in die neutrale Stellung zurückzubringen, während die Handsteuereingabe Null ist.

3. Bremssystem nach Anspruch 1,
mit zusätzlich einer Feder (21), um den bilateral antreibenden Kolben aus jeder Richtung zurück in die neutrale Stellung zu schieben, wenn der Bremsdruck und der Kontrolldruck im wesentlichen gleich sind, wobei das Flußsteuerventil so gesteuert wird, daß, wenn der Bremsdruck Null ist, mit einer Handsteuereingabe von Null, der Steuerdruck Null wird.

4. Bremssystem nach einem der Ansprüche 1 bis 3, mit zusätzlich einem zweiten Wechselventil (27) in der statischen Druckleitung, das eine Antriebsradbremse (18) zum Unterbrechen des Fluidflusses von der Radbremse zurück zum statischen Druckgenerator enthält, wobei, wenn eine automatische Bremssteuerung - wie etwa Traktionssteuerung benötigt wird, das zweite Wechselventil angepaßt ist, um den Druckmittelfluß von der Radbremse zu dem statischen Druckgenerator zu unterbrechen, und wobei der antreibende Kolben gesteuert wird, um das Flußsteuerventil in eine solche Richtung zu bewegen, daß die Kapazität der statischen Druckleitung verringern wird, um den gewünschten Bremsdruck zu erzeugen.

5. Bremssystem nach einem der Ansprüche 1 bis 3,
mit zusätzlich einem Hubsensor (28) zum Detektieren des Hubs eines Pedals (1) oder eines mit dem Pedal verbundenen Elementes, wobei der antreibende Kolben so gesteuert wird, daß in der normalen Steuerphase der handbetätigte Steuerhub und die Fahrzeugverlangsamung in einer vorgegebenen Beziehung zueinander stehen.

6. Bremssystem nach einem der Ansprüche 1 bis 3,
mit außerdem einem Hubsensor (20) zum Detektieren des Hubs des antreibende Kolbens wenigstens in einer solchen Richtung, daß die Kapazität der statischen Druckleitung verringert wird, wobei der antreibende Kolben so gesteuert wird, daß der Hub des angetriebenen Kolbens und die Fahrzeugverlangsamung in einer vorgegebenen Beziehung zueinander stehen.

7. Bremssystem nach einem der Ansprüche 1 bis 3,
mit außerdem einem Hubsensor (20) zum Detektieren des Hubs des antreibende Kolbens zumindest in einer solchen Richtung, daß die Kapazität der statischen Druckleitung verringert wird, und einem Hubsensor (28) zum Detektieren des Hubs eines Pedals (1) oder eines mit dem Pedal verbundenen Elementes, wobei der antreibende Kolben so gesteuert wird, daß der Hub des angetriebenen Kolbens und der handbetätigte Steuerhub in einer vorgegebenen Beziehung zueinander sind.

8. Bremssystem nach einem der Ansprüche 1 bis 3,
mit außerdem einem Hubsensor (20) zum Detektieren des Hubs des antreibende Kolbens zumindest in einer solchen Richtung, daß die Kapazität der statischen Druckleitung verringert wird, und einem Drucksensor zum Detektieren der handbetätigte Steuerkraft oder eines ihr proportionalen Druckmitteldrucks, wobei der antreibende Kolben so gesteuert wird, daß der Hub des antreibenden Kolbens und die Handbetätigte Steuerkraft oder der ihr proportionale Druckmitteldruck in einer vorgegebenen Beziehung zueinander stehen.

9. Bremssystem nach einem der Ansprüche 1 bis 3,
bei dem der statische Druckgenerator ein Tandemhauptzylinder ist, und das Bremssystem zwei statische Druckleitungen hat, wobei der bilateral antreibende Kolben in wenigstens einer der statischen Druckleitungen vorgesehen ist, die zu der Kammer des Hauptzylinders gehört, welche näher an dem handbetätigten Steuerende angeordnet ist.

## Revendications

1. Système de freinage comportant au moins une ligne de pression statique (7) comprenant au moins un frein de roue (15) et un générateur de pression statique (10, 11), directement ou indirectement actionné par un dispositif d'entrée manuelle (1), ladite ligne de pression statique (7) comprenant :
un piston d'entraînement à double effet (19) sur une extrémité duquel agit la pression de freinage régnant dans le cylindre dudit frein de roue (15) et sur l'autre extrémité duquel agit une pression de commande, une valve de commutation (12, 14) prévue dans la ligne de pression statique à un emplacement entre un générateur (2) de pression statique et la liaison du piston d'entraînement à double effet (19) à la ligne de pression statique, étant ainsi capable de couper l'écoulement de fluide du générateur de pression statique vers le frein de roue mais pas l'écoulement de fluide du frein de roue vers ledit piston d'entraînement à double effet, la valve de commutation (12, 14) étant dans sa position inactive pendant le fonctionnement normal, une valve de commande d'écoulement (23) normalement formée pour commander la pression de commande dudit piston d'entraînement, un premier moyen de détecteur (28) pour détecter la course dudit dispositif d'entrée manuelle, un deuxième moyen de détecteur pour détecter une décélération ou d'autres facteurs de freinage étroitement associés à la décélération, et une unité de commande électronique (29) pour adresser des ordres de commande à ladite valve de commande d'écoulement,
des moyens pour commander ladite valve de commande d'écoulement afin de maintenir ledit piston d'entraînement dans une position neutre prédéterminée pendant que ledit dispositif d'entrée manuelle n'est pas actionné ; et
des moyens pour commander, dans une phase de commande antiblocage, ladite valve de commutation afin de couper l'écoulement de fluide dudit générateur de pression statique vers le frein de roue et simultanément commander ladite valve de commande d'écoulement afin d'augmenter la capacité de ladite ligne de pression statique,
caractérisé en ce que ladite unité de commande électronique comprend :
des moyens pour commander, dans une phase de fonctionnement normal, ladite valve de commande d'écoulement de façon a déplacer ledit piston à double effet dans une direction propre à réduire la capacité de ladite ligne de pression statique et ainsi raccourcir la course dudit dispositif d'entrée manuelle tout en maintenant une relation prédéterminée entre la course dudit dispositif d'entrée manuelle et la décélération ou d'autres facteurs de freinage étroitement associés à la décélération.

2. Système de freinage selon la revendication 1, comprenant en outre un capteur de position (28) pour détecter au moins la position neutre dudit piston d'entraînement à double effet afin de commander ladite valve de commande d'écoulement sur la base des signaux provenant dudit capteur de position pour ramener ledit piston d'entraînement à la position neutre pendant que l'entrée de commande manuelle est nulle.

3. Système de freinage selon la revendication 1, comprenant en outre un ressort (21) pour rappeler ledit piston d'entraînement à double effet vers la position neutre à partir de l'un ou l'autre sens quand la pression de freinage et la pression de commande sont sensiblement égales, ladite valve de commande d'écoulement étant commandée de façon que quand la pression de freinage est nulle avec une entrée de commande manuelle nulle, la pression de commande deviendra nulle.

4. Système de freinage selon l'une quelconque des revendications 1 à 3, comprenant en outre une deuxième valve de commutation (27) prévue dans la ligne de pression statique comportant un frein de roue d'entraînement (18) pour couper l'écoulement de fluide retournant du frein de roue vers le générateur de pression statique, où, quand une commande de freinage automatique telle qu'une commande de traction est requise, ladite deuxième valve de commutation est prévue pour couper l'écoulement de fluide dudit frein de roue vers ledit générateur de pression statique et ledit piston d'entraînement est commandé afin de déplacer ladite valve de commande d'écoulement dans une direction propre à réduire la capacité de la ligne de pression statique pour engendrer une pression de freinage désirée.

5. Système de freinage selon l'une quelconque des revendications 1 à 3, comprenant en outre un capteur de course (28) pour détecter la course d'une pédale (1) ou celle d'un élément associé à la pédale, ledit piston d'entraînement étant commandé de sorte que dans la phase de commande normale, la course de commande manuelle et la décélération du véhicule seront dans une relation prédéterminée l'une avec l'autre.

6. Système de freinage selon l'une quelconque des revendications 1 à 3, comprenant en outre un capteur de course (20) pour détecter la course dudit piston d'entraînement au moins dans une direction propre à réduire la capacité de la ligne de pression statique, ledit piston d'entraînement étant commandé de sorte que la course dudit piston d'entraînement et la décélération du véhicule seront dans une relation prédéterminée l'une avec l'autre.

7. Système de freinage selon l'une quelconque des revendications 1 à 3, comprenant en outre un capteur de course (20) pour détecter la course dudit piston d'entraînement au moins dans une direction propre à réduire la capacité de la ligne de pression statique et un capteur de course (28) pour détecter la course d'une pédale (1) d'un élément associé à la pédale, ledit piston d'entraînement étant commandé de sorte que la course du piston d'entraînement et la course de commande manuelle seront dans une relation prédéterminée l'une avec l'autre.

8. Système de freinage selon l'une quelconque des revendications 1 à 3, comprenant en outre un capteur de course (20) pour détecter la course dudit piston d'entraînement au moins dans une direction propre à réduire la capacité de la ligne de pression statique et un capteur de pression pour détecter la force de commande manuelle ou une pression de fluide proportionnelle à celle-ci, ledit piston d'entraînement étant commandé de sorte que la course du piston d'entraînement et la force de commande manuelle ou la pression de fluide proportionnelle à celle-ci seront dans une relation prédéterminée l'une avec l'autre.

9. Système de freinage selon l'une quelconque des revendications 1 à 3, dans lequel ledit générateur de pression statique est un maître-cylindre en tandem et le système de freinage comporte deux lignes de pression statique, ledit piston d'entraînement à double effet étant prévu dans au moins une ligne de pression statique appartenant à la chambre du maître-cylindre située plus près de l'extrémité de commande manuelle.
